# EUROPEAN PATENT APPLICATION

(11) **EP 4 779 726 A1**
(43) Date of publication of application: **22.07.2026**
(21) Application number: 24864194.6
(22) Date of filing: 27.06.2024
(51) Int. Cl.: H01M 8/0202, H01M 8/18

(54) **FLOW BATTERY BIPOLAR PLATE AND CURRENT COLLECTING PLATE**

(30) Priority: 13.09.2023 CN 202311174505
(71) Applicant: VRB Energy Inc., Grand Cayman (KY)
(72) Inventor: WANG, Zhen, Beijing 101100 (CN); ZHAO, Zhiling, Beijing 101100 (CN); MA, Hedi, Beijing 101100 (CN); LIU, Huichao, Beijing 101100 (CN); GE, Qiming, Beijing 101100 (CN)
(74) Representative: Ricker, Mathias
(86) International application number: PCT/CN2024/101910
(87) International publication number: WO 2025/055469

(57) **Abstract**

The present disclosure provides a bipolar plate and a current collector plate of a flow battery. The bipolar plate or the current collector plate includes a support layer, wherein the support layer includes a first surface in contact with an electrode and a second surface opposite thereto; the support layer is provided with holes passing through the first surface and the second surface; the holes are provided with a conductive filler therein; the first surface is provided with a first region and a second region, the first region surrounds all of the holes, and the second region is the remaining region of the first surface; the second surface is provided with a third region and a fourth region, the third region surrounds all of the holes, and the fourth region is the remaining region of the second surface; and the first region has a resistivity less than that of the second region. In the present disclosure, on the basis of ensuring the physical strength of the bipolar plate or current collector plate, optimization has been carried out to greatly improve the corrosion resistance and electrical performance.

## Description

### RELATED APPLICATIONS

This application claims priority to Chinese Patent Application No. 202311174505.5, filed September 13, 2023, and titled BIPOLAR PLATE AND CURRENT COLLECTOR PLATE OF FLOW BATTERY, which is incorporated herein by reference in its entirety.

### TECHNICAL FIELD

The present disclosure relates to, but is not limited to, the field of flow battery technology, and in particular to, but not limited to, a bipolar plate and current collector plate for an all-vanadium flow battery.

### BACKGROUND

Nowadays, as new clean energy gradually replaces traditional energy, energy storage systems have a strut-type effect on the whole new power generation industry as an indispensable link in the new clean energy systems. Since new clean power generation energy (for example, wind power, solar power, etc.) is greatly affected by natural environmental factors, it is difficult to continuously output stable and safe electric energy, so that it is very important to use energy storage batteries as a connection part in the new power generation energy. In the field of energy storage batteries, flow batteries are widely used in the energy storage industry because they are highly stable and safe, and at the same time, their power carrying capacity, service life and long-term discharge capabilities are far superior to other energy storage devices (such as lithium batteries, pumped storage, air compression storage).

At present, a bipolar plate or a current collector plate used in a flow battery is a conductive plate made of various types of resin plastics as a main material, and a conductive agent and a dispersant as an auxiliary material, wherein the resin plastics include PVDF, PP, PE, PVC and the like, and the bipolar plate or the current collector plate using PVDF as the main material has good chemical resistance, high temperature resistance, oxidation resistance and conductivity, but their performance in tensile strength and ductility is average. It is easy to bend or even break at the edge seal. In addition, due to the requirements of the working environment of the bipolar plate or the current collector plate, a region not covered by an electrode may be corroded when it comes into contact with a corresponding electrolyte, thereby easily causing internal leakage of the battery and affecting the normal use of the battery.

### SUMMARY

The following is a summary of the subject described in detail herein. This summary is not intended to limit the scope of protection of the claims.

In the present disclosure, a plate material having high strength such as a metal plate is used as a main support layer; holes are punched in an electrode reaction region thereof; the holes are internally filled with a conductive slurry; after curing, a dense conductive film is formed in the region by using a method such as electrochemical deposition, physical vapor deposition, or chemical vapor deposition, and an insulating slurry is coated on the surface of a non-electrode reaction region. In the present disclosure, weight reduction is optimized on the basis of ensuring the physical strength of the bipolar plate. Conductive and insulating treatments are carried out in the electrode region and the non-electrode region, respectively. The resistance and conductivity of the bipolar plate are greatly improved. If only single-sided preparation is carried out, then a stack current collector plate can be obtained, and the current collector plate can be in direct contact with an electrode. The amount of bipolar plates used in the stack is reduced and the electrical conductivity is increased.

Embodiments of the present disclosure provide a support layer for a bipolar plate or a current collector plate. The support layer comprises a first surface in contact with an electrode and a second surface opposite thereto;
the support layer is provided with holes passing through the first surface and the second surface;
the holes are provided with a conductive filler therein;
the first surface is provided with a first region and a second region, the first region surrounds all of the holes, and the second region is the remaining region of the first surface; the second surface is provided with a third region and a fourth region, the third region surrounds all of the holes, and the fourth region is the remaining region of the second surface; and
the first region has a resistivity less than that of the second region.

In some embodiments provided by the present disclosure, the number of holes may be one or more.

In some embodiments provided by the present disclosure, the area of all of the holes accounts for 10% to 70% of the area of the first region.

In some embodiments provided by the present disclosure, the area of all of the holes accounts for 10% to 70% of the area of the thirda region.

In some embodiments provided by the present disclosure, the conductive filler has a density lower than that of the material of the support layer.

In some embodiments provided by the present disclosure, the conductive filler has a resistivity of 1 mΩ×cm to 10 mΩ×cm.

In some embodiments provided by the present disclosure, the support layer has a Brinell hardness ranging from 20 HB to 500 HB.

In some embodiments provided by the present disclosure, the material of the support layer is selected from any one or more of stainless steel, copper alloy, titanium alloy, aluminum alloy and magnesium alloy.

In still another aspect, an embodiment of the present disclosure provides a bipolar plate. The bipolar plate comprises the support layer described above; the third region has a resistivity less than that of the fourth region; and
the first region and the third region are provided with a conductive coating, and the second region and the fourth region are provided with an insulating coating.

In some embodiments provided by the present disclosure, a thickness ratio of the conductive coating to the support layer is (1 to 10) : (10 to 100).

In some embodiments provided by the present disclosure, a thickness ratio of the insulating coating to the support layer is (1 to 10) : (10 to 100).

In some embodiments provided by the present disclosure, the conductive coating has a resistivity of 1 mΩ×cm to 10 mΩ×cm.

In some embodiments provided by the present disclosure, the insulating coating has a resistivity of 1000 mΩ×cm or more.

In some embodiments provided by the present disclosure, the material of the conductive coating is a doped C/CrN multilayer gradient coating, wherein a doping element is selected from any one or more of Ti, Al, Mo, W, Nb, Ni, Zr, Fe and Si.

In some embodiments provided by the present disclosure, the type and proportion of each doping element is controlled by the selection of a doping target and the magnitude of a current.

In some embodiments provided by the present disclosure, the conductive coating may be prepared using any one or more of electrochemical deposition, physical vapor deposition, chemical vapor deposition, and magnetron sputtering.

In still another aspect, an embodiment of the present disclosure provides a current collector plate. The current collector plate comprises the support layer described above; and the first region is provided with a conductive coating, and the second region is provided with an insulating coating.

In some embodiments provided by the present disclosure, a thickness ratio of the conductive coating to the support layer is (1 to 10) : (10 to 100).

In some embodiments provided by the present disclosure, a thickness ratio of the insulating coating to the support layer is (1 to 10) : (10 to 100).

In some embodiments provided by the present disclosure, the conductive coating has a resistivity of 1 mΩ×cm to 10 mΩ×cm.

In some embodiments provided by the present disclosure, the insulating coating has a resistivity of 1000 mΩ×cm or more.

In some embodiments provided by the present disclosure, the material of the conductive coating is a doped C/CrN multilayer gradient coating, wherein a doping element is selected from any one or more of Ti, Al, Mo, W, Nb, Ni, Zr, Fe and Si.

In some embodiments provided by the present disclosure, the type and proportion of each doping element is controlled by the selection of a doping target and the magnitude of a current.

In some embodiments provided by the present disclosure, the conductive coating may be prepared using any one or more of electrochemical deposition, physical vapor deposition, chemical vapor deposition, and magnetron sputtering.

In yet another aspect, an embodiment of the present disclosure provides a flow battery. The flow battery comprises the bipolar plate described above;
and/or, the flow battery comprises the current collector plate described above; and
the flow battery is selected from any one or more of an all-vanadium flow battery, an iron-chromium flow battery, a zinc-iron flow battery and a zinc-bromine flow battery.

In some embodiments provided by the present disclosure, the electrode is a battery electrode on one side of the bipolar plate in the flow battery, and the second electrode is a battery electrode on the other side of the bipolar plate in the flow battery.

In the present disclosure, a plate material having high strength such as a metal plate is used as a main support layer; holes are formed in an electrode reaction region thereof; the holes are internally filled with a conductive slurry; after curing, a dense conductive film is formed in the region by using a method such as electrochemical deposition, physical vapor deposition, or chemical vapor deposition, and an insulating slurry is coated on the surface of a non-electrode reaction region. In the present disclosure, weight reduction is optimized on the basis of ensuring the physical strength of the bipolar plate. Conductive and insulating treatments are carried out in the electrode region and the non-electrode region, respectively. The corrosion resistance, and electrical and mechanical properties of the bipolar plate are greatly improved. If only single-sided preparation is carried out, then a current collector plate for a battery stack can be obtained, and the current collector plate can be in direct contact with an electrode. The number of bipolar plates used in the battery stack is reduced and the electrical conductivity is increased.

Other features and advantages of the present disclosure will be set forth in the following description, and in part will become apparent from the description, or may be understood by means of the implementation of the present disclosure. Other advantages of the present disclosure will be achieved and obtained by means of the solutions described in the description.

### BRIEF DESCRIPTION OF THE DRAWINGS

The accompanying drawings are used to provide an understanding of the technical solutions of the present disclosure and constitute a part of the description, and together with the embodiments of the present disclosure, are used to explain the technical solution of the present disclosure and not to limit the technical solution of the present disclosure.

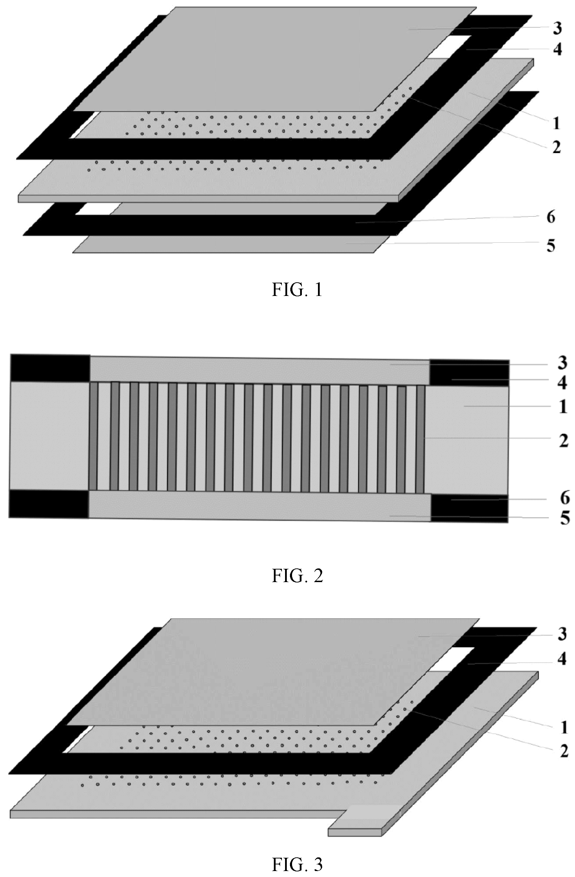

FIG. 1 is a schematic diagram of a bipolar plate according to an embodiment of the present disclosure.
FIG. 2 is a sectional view of a bipolar plate having a section perpendicular to a plane in contact with an electrode, according to an embodiment of the present disclosure.
FIG. 3 is a schematic diagram of a current collector plate according to an embodiment of the present disclosure.
FIG. 4 is a sectional view of a bipolar plate having a section perpendicular to a plane in contact with an electrode, according to an embodiment of the present disclosure.
FIG. 5A is a physical picture of a bipolar plate according to Example 1 of the present disclosure before a cycle.
FIG. 5B is a physical picture of the bipolar plate according to Example 1 of the present disclosure after 1000 cycles.

Reference numerals: 1. support layer; 2. hole; 3. conductive coating of first region; 4. insulating coating of first region; 5. conductive coating of second region; 6. insulating coating of second region.

### DETAILED DESCRIPTION

To make the objects, technical solutions, and advantages of the present disclosure clearer, the embodiments of the present disclosure will be described in detail below. It should be noted that, in the case of no conflict, the embodiments in the present disclosure and the features in the embodiments may be arbitrarily combined with each other.

In an embodiment of the present disclosure, a support layer for a bipolar plate or a current collector plate is exemplarily provided. The support layer includes a first surface in contact with an electrode and a second surface opposite thereto.

The support layer is provided with holes passing through the first surface and the second surface.

The holes are provided with a conductive filler therein.

The first surface is provided with a first region and a second region. The first region surrounds all of the holes, and the second region is the remaining region of the first surface. The second surface is provided with a third region and a fourth region. The third region surrounds all of the holes, and the fourth region is the remaining region of the second surface.

The first region has a resistivity less than that of the second region.

Exemplarily, the number of holes may be one or more.

Exemplarily, the area of all of the holes accounts for 10% to 70% of the area of the first region.

Exemplarily, the area of all of the holes accounts for 10% to 70% of the area of the third region.

Exemplarily, the conductive filler has a density lower than that of the material of the support layer.

Exemplarily, the conductive coating has a resistivity of 1 mΩ×cm to 10 mΩ×cm.

Exemplarily, the support layer has a Brinell hardness ranging from 20 HB to 500 HB.

Exemplarily, the material of the support layer is selected from any one or more of stainless steel, copper alloy, titanium alloy, aluminum alloy and magnesium alloy. Exemplarily, the material of the support layer may be, for example, a Tongrun copper-aluminum T2 red copper plate.

In yet another aspect, a bipolar plate is exemplarily provided in an embodiment of the present disclosure. The bipolar plate includes the support layer described above.

The third region has a resistivity less than that of the fourth region.

The first region and the third region are provided with a conductive coating, and the second region and the fourth region are provided with an insulating coating.

Exemplarily, the thickness ratio of the conductive coating to the support layer is (1 to 10) : (10 to 100).

Exemplarily, the thickness ratio of the insulating coating to the support layer is (1 to 10) : (10 to 100).

Exemplarily, the conductive coating has a resistivity of 1 mΩ×cm to 10 mΩ×cm.

Exemplarily, the insulating coating has a resistivity of 1000 mΩ×cm or more.

Exemplarily, the material of the conductive coating is a doped C/CrN multilayer gradient coating, wherein a doping element is selected from any one or more of Ti, Al, Mo, W, Nb, Ni, Zr, Fe and Si.

Exemplarily, the type and proportion of each doping element is controlled by the selection of a doping target and the magnitude of a current.

Exemplarily, the conductive coating may be prepared using any one or more of electrochemical deposition, physical vapor deposition, chemical vapor deposition, and magnetron sputtering.

In still another aspect, a current collector plate is exemplarily provided in an embodiment of the present disclosure. The current collector plate includes the support layer described above.

The first region is provided with a conductive coating, and the second region is provided with an insulating coating.

Exemplarily, the thickness ratio of the conductive coating to the support layer is (1 to 10) : (10 to 100).

Exemplarily, the thickness ratio of the insulating coating to the support layer is (1 to 10) : (10 to 100).

Exemplarily, the conductive coating has a resistivity of 1 mΩ×cm to 10 mΩ×cm.

Exemplarily, the insulating coating has a resistivity of 1000 mΩ×cm or more.

Exemplarily, the material of the conductive coating is a doped C/CrN multilayer gradient coating, wherein a doping element is selected from any one or more of Ti, Al, Mo, W, Nb, Ni, Zr, Fe and Si.

Exemplarily, the type and proportion of each doping element is controlled by the selection of a doping target and the magnitude of a current.

Exemplarily, the conductive coating may be prepared using any one or more of electrochemical deposition, physical vapor deposition, chemical vapor deposition, and magnetron sputtering.

In still another aspect, a flow battery is exemplarily provided in an embodiment of the present disclosure. The flow battery includes the bipolar plate described above,
and/or, the flow battery includes the current collector plate described above.

The flow battery is selected from any one or more of an all-vanadium flow battery, an iron-chromium flow battery, a zinc-iron flow battery and a zinc-bromine flow battery.

Exemplarily, the electrode is a battery electrode on one side of the bipolar plate in the flow battery, and the second electrode is a battery electrode on the other side of the bipolar plate in the flow battery.

Exemplarily, the present disclosure provides a method for preparing a bipolar plate or a current collector plate described above. The method includes:
1) processing of support layer: drilling a support layer by using a processing machine tool, and polishing after completion of drilling to obtain a substrate;
2) placing the support layer into a mold, adding a conductive slurry to the mold, vacuum drying and then removing a plate material, scraping off a solidified layer attached to a metal surface, and grinding and polishing to obtain a substrate 1;
3) applying an insulating coating to a second region and a fourth region of the substrate 1, and then vacuum drying, wherein the coating has a thickness; and
4) depositing a conductive coating in a first region and a third region to obtain a bipolar plate.

Exemplarily, if the insulating coating is only applied to the second region in step 3), and the conductive coating is only deposited in the first region step 4), a current collector plate can be prepared. The bipolar plate may also be used as a current collector plate.

Exemplarily, the diameter of holes may be 0.1 cm to 5 cm, and the spacing between the holes may be 0.1 cm to 1 cm. The thickness of a support plate may be 0.1 cm to 1 cm.

Exemplarily, the preparation of the conductive coating can include: mixing and stirring a main material, a solvent and a dispersant in a ratio of 1 : 5 : 0.1 to prepare slurry A; and mixing and stirring a conductive agent, the solvent and the dispersant in a ratio of 1 : 5 : 0.1 to prepare slurry B. The main material and the conductive agent are dry-mixed to obtain powder A. Slurry A, slurry B and powder A are mixed and stirred to prepare a conductive slurry. Among them,
the main material may be polymer resin powder or emulsion, such as polypropylene PP, polyethylene PE, polyvinyl chloride PVC, polyvinylidene fluoride PVDF, polytetrafluoroethylene PTFE, SBR, etc.; the solvent may be water, ethanol, tetrahydrofuran, N-methylpyrrolidone NMP, etc.; the dispersant may be a polymer dispersant such as starch, methyl cellulose, ethyl cellulose, hydroxy cellulose, polyvinyl alcohol, etc.; the conductive agent may be a carbon black material such as acetylene black, Ketjen black, superconductive carbon black, conductive carbon black SP, Ketjen black ECP, carbon black Black Pearls, carbon nanotubes, graphene, etc. A graphite material is, for example, fine flake graphite, flake graphite, expanded graphite, microcrystalline graphite, ultrafine carbon fiber, spherical graphite, mesocarbon microbeads, etc. Metal powder is a metal with good conductivity such as gold, silver, copper, chromium, zinc, etc. This is only a preparation method for a conductive slurry, and any preparation method that can prepare a bipolar plate slurry may be used.

Exemplarily, the insulating coating may be prepared by grinding or ball-milling the above-mentioned main material and the above-mentioned dispersant. The above-mentioned solvent is then added and stirred uniformly.

Exemplarily, the insulating slurry is applied to the second region and then vacuum dried. The coating thickness may be 0.1 mm to 1 mm.

Exemplarily, the thickness of the conductive coating may be 0.1 mm to 1 mm.

Exemplarily, Example 1 of the present disclosure is as follows:

Processing of a support layer: Pure 304 stainless steel (Brinell hardness of 187 HB) was cut into specifications of 25 cm × 19 cm × 1 cm; the surfaces and edges were ground and polished; 21 cm × 16 cm rectangular regions were drawn in the center of the front and back sides of the steel plate as electrode regions (i.e., a first region and a third region); a punch is used to drill holes in the electrode regions, wherein the diameter of the holes is 1 cm, the spacing between the holes is 1 cm, and the area of all of the holes accounts for 18% of that of the first (third) region; and the walls of the holes were ground and polished.

Preparation of a conductive slurry: polyvinylidene fluoride PVDF, carboxymethyl cellulose CMC, and N-methyl pyrrolidone NMP were mixed and stirred in a weight ratio of 1.2 : 0.1 : 10 at a rotational speed of 600 r/min. The stirring time is 5 h. Conductive carbon black SP, carboxymethyl cellulose CMC, and N-methyl pyrrolidone NMP were mixed and stirred in a weight ratio of 1 : 0.1 : 10 at a rotational speed of 600 r/min. The stirring time is 5 h. Polyvinylidene fluoride PVDF and conductive carbon black SP were ground in a weight ratio of 0.7 : 0.1, with the grinding time being 30 min. The above-mentioned three mixtures were again mixed and stirred at a rotational speed of 600 r/min for 30 min. Subsequently, bubble removal was performed under vacuum, the rotational speed was reduced to 200 r/min for 30 min. After that, it restored to normal air pressure, and the rotational speed was increased to 300 r/min for 3h to obtain a conductive slurry. The density of the prepared conductive slurry was less than the material density of the steel plate, and the resistivity was 5 mΩ×cm.

Filling of the conductive slurry: the steel plate was fixed to a mold, and the conductive slurry was injected into the mold. The mold was placed in a vacuum drying oven for vacuum drying at a temperature of 120°C, with the drying time of 12 h. After taken out, an excessive material layer on the surface of the steel plate was removed by using a scraper, and leveling, grinding and polishing were performed again.

Preparation of an insulating slurry: polyvinylidene fluoride PVDF and carboxymethyl cellulose CMC were mixed in a ratio of 9 : 1, and ground for 30 min; the mixture was placed into a mixer for dry mixing for 30 min; NMP was added to a material tank, wherein the weight ratio of the three is 9 : 1 : 50, the rotational speed is 600 r/min, the time is 30 min; and then bubble removal was performed under vacuum, and the rotational speed was reduced to 200 r/min for 30 min. After that, it was restored to normal air pressure, and the rotational speed was increased to 300 r/min for 3 h. An insulating slurry was obtained. The resistivity of the insulating coating was 2560 mΩ×cm.

Growth and application of a surface layer: the insulating slurry was applied to non-electrode regions (i.e., a second region and a fourth region) with the coating thickness of 1 mm, and vacuum dried for 6 h. After that, ultrasonic cleaning was performed, and it was placed in a UDP650 closed field unbalanced magnetron sputtering ion plating device. Vacuuming was started to make the background vacuum degree lower than 5 × 10-6 Torr, and the introduction of argon gas was started to maintain the vacuum degree at 2 × 10⁻² Torr. A substrate bias voltage was adjusted to -70 V, a chromium target current was 7 A, and a Cr layer was deposited for 15 minutes. The bias voltage was controlled at -60 V, the chromium target current was maintained at 7 A, nitrogen gas was introduced at a gas flow rate of 25 SCCM, and a CrN coating was deposited for 30 minutes. A graphite target was turned on, and a graphite target current was gradually increased from 0 A to 6 A. The bias voltage was controlled at -60 V, the chromium target current was 7 A, and a chromium carbonitride layer was deposited for 15 minutes. The bias voltage was controlled at -60 V, the graphite target current was 6 A, and a graphite-like carbon coating was deposited for 0.5 hours. Finally, a doped C/CrN multilayer coating with a conductive film was obtained. The resistivity of the conductive film was 2 mΩ×cm, and the thickness of the conductive film was 0.1 mm.

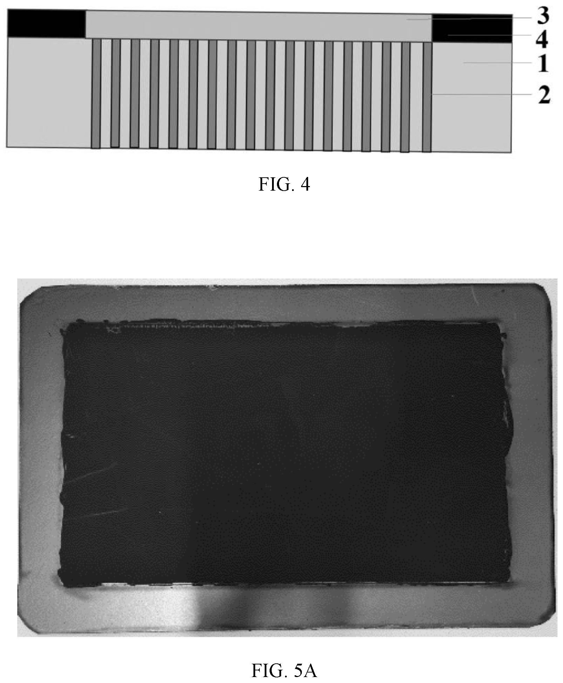

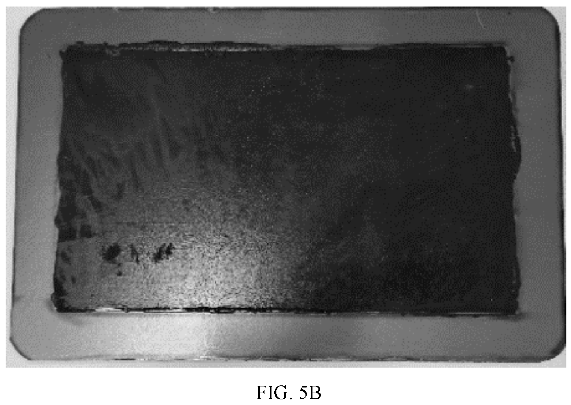

As can be seen from FIGS. 5A and 5B, after 1000 cycles of the bipolar plate prepared in Example 1, the structure of the bipolar plate was stable without significant deformation and weaving.

Exemplarily, Example 2 of the present disclosure is as follows:
Processing of a support layer: a T4 copper plate (Brinell hardness of 40 HB) was selected as a plate material, wherein the hole diameter was changed to 2 cm, and other parameters were the same as those of Example 1. The area of the holes accounts for 32% of that of the first (third) region.

Preparation of a conductive slurry: carboxymethyl cellulose CMC, carbon black KB, and copper powder were mixed and ground in a ratio of 0.5 : 1 : 1 for 30 min; SBR and water were mixed and stirred in a weight ratio of 1 : 10 for 1 h, with the rotational speed of 600 r/min; and a mixture of CMC and KB was placed in a material tank and stirred for 1 h, with the rotational speed of 600 r/min. Subsequently, bubble removal was performed under vacuum, and the rotational speed was reduced to 200 r/min for 30 min. After that, it was restored to normal air pressure, and the rotational speed was increased to 300 r/min for 2 h to obtain a conductive slurry. The density of the prepared conductive slurry was less than the material density of the steel plate, and the resistivity was 2.5 mΩ×cm.

Filling of the conductive slurry: it is the same as Example 1.

Preparation of an insulating slurry: CMC and SBR were mixed and stirred in a weight ratio of 0.1 : 1 for 30 min, with the rotational speed of 600 r/min; and subsequently, bubble removal was performed under vacuum, and the rotational speed was reduced to 200 r/min for 30 min. After that, it was restored to normal air pressure, and the rotational speed was increased to 300 r/min for 3 h. An insulating slurry was obtained. The resistivity of the insulating coating was 1892 mΩ×cm. The thickness of the insulating coating was 1 mm.

Growth and application of a surface layer: while other parameters were kept consistent with those of Example 1, a Ti target and an A1 target were turned on for elemental doping and texture control, wherein both the target current of the Ti target and the target current of the A1 target were kept at 2 A, and gradually reduced to 0 during a fifth step. Finally, a Ti and Al doped C/CrN multilayer coating with a conductive film was obtained. The resistivity of the conductive film was 1.6 mΩ×cm.The thickness of the conductive film was 1.5 mm.

### Comparative Example 1:

This comparative example is different from Example 1 only in that it does not involve punching the support body and providing the conductive material in the holes, and other processes are exactly the same.

### Comparative Example 2:

This comparative example is different from Example 1 only in that it does not involve punching the support body and depositing the conductive coating in the first region and the third region. The second region and the fourth region were provided with an insulating coating, which is unchanged.

### Comparative Example 3:

A bipolar plate used in this comparative example is a common resin carbon bipolar plate without holes, purchased from Liaoning Kejing New Materials Co., Ltd., with a specification model of KVFP0101 D50.

The electrodes prepared in the examples and comparative examples were applied to all-vanadium flow batteries, forming two flow batteries which are connected in series to form a small battery stack. The small battery stack was tested.

**Table 1: Performance statistics of examples and comparative examples**

| | Coulomb efficiency | Energy efficiency | Voltage efficiency | R₅₀C | R₅₀D |
|---|---|---|---|---|---|
| Unit | % | % | % | Ω×cm² | Ω×cm² |
| Example 1 | 96.5 | 87.2 | 90.3 | 0.87 | 0.88 |
| Example 2 | 96.4 | 87.1 | 90.3 | 0.86 | 0.88 |
| Comparative Example 1 | 96.6 | 86.1 | 89.1 | 0.89 | 0.9 |
| Comparative Example 2 | 96.5 | 84.2 | 87.2 | 1.13 | 1.09 |
| Comparative Example 3 | 96.4 | 85.1 | 88.2 | 0.94 | 0.95 |

The bipolar plate (or current collector plate) prepared in the technical solution of the present disclosure not only reduces weight, but also further improves electrical properties and use stability of the battery stack.

## Claims

1. A support layer for a bipolar plate or a current collector plate, **characterized by** comprising a first surface in contact with an electrode and a second surface opposite thereto;
wherein the support layer is provided with holes passing through the first surface and the second surface;
the holes are provided with a conductive filler therein;
the first surface is provided with a first region and a second region, the first region surrounds all of the holes, and the second region is a remaining region of the first surface; the second surface is provided with a third region and a fourth region, the third region surrounds all of the holes, and the fourth region is a remaining region of the second surface; and
the first region has a resistivity less than that of the second region.

2. The support layer for the bipolar plate or the current collector plate according to claim 1, wherein the area of all of the holes accounts for 10% to 70% of the area of the first region; and
the area of all of the holes accounts for 10% to 70% of the area of the third region.

3. The support layer for the bipolar plate or the current collector plate according to claim 1, wherein the conductive filler has a density lower than that of a material of the support layer; and
the conductive filler has a resistivity of 1 mΩ×cm to 10 mΩ×cm.

4. The support layer for the bipolar plate or the current collector plate according to claim 1, wherein the support layer has a Brinell hardness ranging from 20 HB to 500 HB.

5. The support layer for the bipolar plate or the current collector plate according to claim 1, wherein a material of the support layer is selected from any one or more of stainless steel, copper alloy, titanium alloy, aluminum alloy and magnesium alloy.

6. A bipolar plate **characterized by** comprising the support layer according to claim 1,
wherein the third region has a resistivity less than that of the fourth region; and
the first region and the third region are provided with a conductive coating, and the second region and the fourth region are provided with an insulating coating.

7. The bipolar plate according to claim 6, wherein a thickness ratio of the conductive coating to the support layer is (1 to 10) : (10 to 100);
a thickness ratio of the insulating coating to the support layer is (1 to 10) : (10 to 100);
the conductive coating has a resistivity of 1 mΩ×cm to 10 mΩ×cm;
the insulating coating has a resistivity of 1000 mΩ×cm or more; and
a material of the conductive coating is a doped C/CrN multilayer gradient coating, wherein a doping element is selected from any one or more of Ti, Al, Mo, W, Nb, Ni, Zr, Fe and Si.

8. A current collector plate, **characterized by** comprising the support layer according to claim 1,
wherein the first region is provided with a conductive coating, and the second region is provided with an insulating coating.

9. The current collector plate according to claim 8, wherein a thickness ratio of the conductive coating to the support layer is (1 to 10) : (10 to 100);
a thickness ratio of the insulating coating to the support layer is (1 to 10) : (10 to 100);
the conductive coating has a resistivity of 1 mΩ×cm to 10 mΩ×cm;
the insulating coating has a resistivity of 1000 mΩ×cm or more; and
a material of the conductive coating is a doped C/CrN multilayer gradient coating, wherein a doping element is selected from any one or more of Ti, Al, Mo, W, Nb, Ni, Zr, Fe and Si.

10. A flow battery, **characterized by** comprising the bipolar plate according to claim 6,
wherein the flow battery is selected from any one or more of an all-vanadium flow battery, an iron-chromium flow battery, a zinc-iron flow battery and a zinc-bromine flow battery.
